# EUROPEAN PATENT SPECIFICATION

(11) **EP 4 390 339 B1**
(45) Date of publication and mention of the grant of the patent: **22.04.2026**
(21) Application number: 22307042.6
(22) Date of filing: 23.12.2022
(51) Int. Cl.: G01G 3/14, G01L 1/22

(54) **LOAD CELL AND A CONTAINER CONSTRUCTION THEREWITH**
WÄGEZELLE UND DAMIT AUSGESTATTETER BEHÄLTERAUFBAU
CELLULE DE CHARGE ET CONSTRUCTION DE CONTENEUR AVEC CELLE-CI

(43) Date of publication of application: 26.06.2024
(73) Proprietor: Bollhoff Otalu S.A., 73490 La Ravoire (FR); Böllhoff Verbindungstechnik GmbH, 33649 Bielefeld (DE)
(72) Inventor: JAMBUT, Jean-François, 73190 Challes-Les-Eaux (FR); JEANNIN, Alexandre, 39260 Martigna (FR); ROMALA, Julien, 73000 Chambéry (FR); ROQUES, Alexandre, 73190 Challes-Les-Eaux (FR); DRAHT, Torsten, 33758 Schloß Holte-Stukenbrock (DE); MOEHRING, Jörg, 33106 Paderborn (DE)
(74) Representative: HWP Intellectual Property

(56) References cited:
- KR-B1- 102 181 780
- US-A- 5 313 022

## Description

### 1. Field of the invention

The present invention relates to a load cell for measuring a mechanical load, in particular a weight force, as well as to a container construction including the load cell determining a change in the filling level of the tank.

### 2. Background of the invention

In a variety of applications, containers and tanks are used to provide liquids for an engine or a machine operation. Furthermore, such a container stores a cleaning liquid or lubricants to be regularly supplied to a work in progress. In this context, there is a need to be informed about the container or tank content providing the liquids.

To the end, DE 37 37 658 A1 describes an apparatus for measuring the tank content of an operational liquid tank on a motor vehicle. To achieve a sufficiently accurate indication of the content of the tank fixed to the motor vehicle, especially a fuel tank, the latter is mounted to pivot about a horizontal axis and engages, in the region of its other side, in a torque pick-up with a force-measuring element. The output signal of the force measuring element is evaluated to determine the respective weight of the filled tank as a measure of the tank content.

A further construction of a load transducer is described in US 4,103,545. The transducer generally comprises a sensing structure symmetrically supported on opposite sides by two additional outer structures. This configuration is space consuming. The sensing structure has an upper and a lower flexural beam connected at their ends to relatively massive and rigid end structures. The end structure extends in both directions along the Z-axis to form integral connections with outer structures. Further, the structures are formed out of one single block of metal, such as aluminum. As a technical and an economic disadvantage, the sensing beam uses four resistance wire strain gauges in combination with an adapted circuitry for signal evaluation.

Furthermore, GB 2 316 176 A describes a motor vehicle fuel load measuring system. The amount of fuel remaining in a fuel tank of a motor vehicle is measured by means of a load sensor associated with a bracket used to attach the fuel tank to the floor or other part of the body structure of the vehicle. The tank is pivotally connected at a point to the body structure, and the load sensor is a strain gauge which provides a signal to a microprocessor 21 to drive a display gauge. An arrangement using a load cell in compression between the floor bracket and a lug attached to the tank is also described.

A contact type axial force measurement device capable of predicting the axial force of a bolt by a linear correlation obtained before applying fastening force to the bolt is described in KR 102 181 780 B1. The contact type axial force measurement device comprises: a deformable body through which a bolt penetrates in the longitudinal direction; a first deformable blade provided in one side of the deformable body and fixed to one side of the bolt; a second deformable blade provided in the other side of the deformable body and fixed to the other side of the bolt; a deformation detection sensor provided in one surface of the deformable body and detecting deformation rates of one side of the bolt and the other side of the bolt; and an axial force determination part that determines axial force applied to the bolt by fastening force applied to the bolt based on the deformation rates detected by the deformation detection sensor.

Finally, US 5,313,022 A describes a load cell adapted to be positioned between a foundation and each of several support members for a storage vessel. The load cell includes a circular flex plate having a pair of concentric cylindrical members of different diameters secured to opposite surfaces. A mounting pad adapted to be fastened to the foundation is secured to one of the cylindrical members. A mounting plate is secured to the other cylindrical member. The mounting plate has either a single threaded bore or a threaded stud positioned at the common axis of the cylindrical members for securing the mounting plate to a vessel support member. A strain sensor mounted on the flex plate measures the load-induced deflection of the flex plate.

It is an object of the present invention to provide an alternative load transducer as compared to the prior art in order to evaluate a liquid level of a tank or a container in the context of motor vehicles or the like.

### 3. Summary of the invention

The above object is solved by a deformable load cell according to independent claim 1, a container in combination with the deformable load cell according to claim 7, as well as by a manufacturing method for the deformable load cell according to independent claim 9. Further preferred embodiments and developments result from the following description, the drawings as well as the appending claims.

The present invention provides a deformable load cell with which a mechanical load, in particular a weight force, is determinable. The deformable load cell comprises the following features: a deformable hollow body which is deformable by means of a mechanical load, the deformable hollow body includes at least one deflection wall, which is deformable in a load direction, this means in a direction transversally to the deflection wall, and which is equipped with a strain gauge for determining a deflection, a receiving cavity of the deformable hollow body is surrounded by a circumferential wall and extends perpendicular to the load direction and a fastening structure is provided opposite to the deflection wall, with which the deformable hollow body is fastenable at a fixed point so that the deflection wall is deformable relative to and unaffected by the fixed point. The fastening structure is remotely arranged to the deflection wall so that the fastening structure is functionally not combined with or involved in the mechanical force measurement. The deformable hollow body has the cavity arranged transversely to the load direction, and the deformable hollow body is a hollow cylinder or an elliptic hollow cylinder or a hollow cuboid or a prism having open trapezoidal lateral faces, a rectangular deflection wall and a fastening wall smaller than the deflection wall.

The deformable load cell provides a compact configuration of a multifunctional housing accommodating and protecting a strain gauge as well as enables a load measurement. The multifunctional housing has a deflection wall to be subjected to a mechanical load, in particular a weight force. The subjecting mechanical load results in a deflection of the deflection wall which is captured by a strain gauge. The strain gauge, preferably only one strain gauge, generates a deflection sensible signal to be interpreted as an acting mechanical force. The deflection wall forms part of a circumferentially extending wall enclosing a receiving space or a cavity of the deformable load cell. Thus, the enclosing wall mechanically supports and enables the functionality the deformation effect of the deflection wall. To this end, the deformation hollow body is preferably configured such that it realizes a three-point or a four-point bending situation at the deflection wall. Furthermore, the hollow body realizes a mounting or a fastening structure which is functionally not combined with or involved in the mechanical force measurement. To this end, the fastening structure is remotely arranged to the deflection wall even though being part of the deformable hollow body.

According to a preferred embodiment of the present invention, the fastening structure of the load cell comprises at least one passage channel for a fastening means, the passage channel extending transversely to the load direction or the normal of the deflection wall.

In order to exclude prior art drawbacks from the inventively preferred load cell configuration, the fastening construction of the load cell is arranged functionally remote from the deflection wall. To this end, a fastening opening and/or a fastening channel for receiving a fastening element is arranged in such a distance to the deflection wall that the fastening of the deformable hollow body does not affect the deflection of the deflection wall generated by a mechanical load. The functional separation of the deflection wall and the fastening structure is realized by a preferred lack of superposed forces acting on the deflection face. Even if a fastening torque of a bolt extending through a fastening structure generates a mechanical tension state within the fastening structure, the tension state has a negligible effect on the deflection sensitive deformation of the strain gauge.

Further preferred, the fastening structure comprises at least one passage channel or an opening for a fastening means, the passage channel/opening extending parallel to the load direction.

The above-mentioned negligible impact on the deflection wall caused by any fastening operation and fastening tension results from the preferred orientation of the fastening channel or the fastening opening. The fastening channel or the fastening openings are arranged in a part of the hollow body being oppositely positioned to the deflection wall. Even if a fastening element acting through the fastening channel or the fastening openings, the generated mechanical fastening tensions do not sensitively deform the deflection wall. Further, any tension state deforms the side of the hollow body opposite to and remote from the deflection wall. By preferably calibrating the used strain gauge after fastening the load cell, any interfering strains of the deflection wall are eliminated.

According to the present invention, the deformable hollow body of the load cell has the receiving cavity arranged transversely to the load direction, in particular a longitudinal axis of the cavity is parallel to the deflection wall, and the deformable hollow body is a hollow cylinder or an elliptic hollow cylinder or a hollow cuboid or a prism having open trapezoidal lateral faces, a rectangular deflection wall and a fastening wall smaller than the deflection wall.

The deformable hollow body forms the basis for generating a mechanical load sensitive deflection or deformation of a part of the hollow body. The load induced deformation deflects the strain gauge and thereby produces an electrical signal qualifying the mechanical loading.

According to the inventive teaching, a hollow body facilitates a load induced deformation to be interpreted or sensed by a strain gauge. Therefore, a variety of deformable hollow bodies are preferably used for the load cell configuration. The receiving cavity of each hollow body configuration preferably provides for sufficient space to arrange any control electronics therewithin. It is, however, also preferred to place the control electronics outside of the cavity.

According to different embodiments of the present invention, the hollow body is formed like a hollow cylinder, an elliptic hollow cylinder, a hollow cuboid or a prism having open trapezoidal lateral faces, a rectangular deflection wall and a fastening face smaller than the deflection wall. The mentioned preferred shapes allow for a load sensitive deformation of a part of these hollow bodies forming the deflection wall. Further preferred, the hollow cuboid and the prism realize a straight deflection wall being qualified for a three-point and four-point bending arrangement well understood in the art.

Preferably, in the cavity of the load cell, a control electronics of the strain gauge and the strain gauges is arranged at the deflection wall.

According to a further preferred embodiment of the load cell as described above, the deflection wall of the hollow cuboid is arranged transverse to the load direction and two adjacent lateral faces extending parallel to one another forming a supporting bar structure for the deflection wall.

According to a further preferred embodiment of the present invention, the deformable hollow body is formed like a cuboid with the deflection wall oriented transversely to the loading direction. Based on lateral side supporting the deflection wall, a three-point bending or a four-point bending situation is preferably realized.

To this end, it is additionally preferred that the deflection wall includes a central support or a central support pair in a projecting manner which is opposite to the load direction.

The above problem is further solved by a container in combination with the load cell according to one of the above configurations. The container includes at least two fastening points at which the container is fastenable in an offsetable or displaceable manner in a gravity direction, and the load cell is arranged in a fastened manner underneath the container, contacting the container, as well as at a fixed point.

According to a preferred embodiment of the container, a fastening point of the container is fastenable with the fastening structure of the load cell.

The present invention further provides a manufacturing method of a load cell having the following steps: a. providing a deformable hollow body with a fastening structure, b. arranging a strain gauge at a deflection wall of the hollow body, c. arranging a control electronics in a cavity of the hollow body.

Preferably, the deformable hollow body is provided as a partial piece of an extruded section out of metal.

According to a further preferred embodiment, a fastening means is pre-assembled in the fastening structure.

### 4. Short description of the drawings

In the following, the present invention will be described in detail based on the drawings. In the drawings, the same reference signs denote the same elements and/or components. It shows:
- Figure 1: an embodiment of a tank in combination with the load cell according to a preferred embodiment of the present invention,
- Figure 2: a perspective view of a preferred embodiment of the load cell illustrating the cavity accommodating a strain gauge and control electronics,
- Figure 3: a preferred embodiment of the fastening flange of the tank according to Figure 1 in combination with a preferred load cell both fastened via a fastening means of the load cell,
- Figure 4: a sectional view of the preferred load cell arranged together with the fastening flange of the tank and fastened therewith,
- Figure 5: a sectional view of a preferred embodiment of the deformable hollow body of the preferred load cell being formed like a cuboid to be subjected to a mechanical force,
- Figure 6: a sectional view of a further preferred embodiment of the deformable hollow body of the preferred load cell being formed like a cuboid and having a deflection face in combination with a central support to be subjected to a mechanical force,
- Figure 7: a sectional view of a further preferred embodiment of the deformable hollow body of the preferred load cell being formed like a cuboid, having a laterally extending fastening channel, and having a deflection face in combination with a central support pair to be subjected to a mechanical force,
- Figure 8: a sectional view of a further preferred embodiment of the deformable hollow body of the preferred load cell being formed like a cuboid, having a fastening channel extending parallel to the lateral walls, and having a deflection face in combination with a central support pair to be subjected to a mechanical force,
- Figure 9: a sectional view of a further preferred embodiment of the deformable hollow body of the preferred load cell being formed like a hollow cylinder, and having a laterally extending fastening channel, to be subjected to a mechanical force,
- Figure 10: a sectional view of a further preferred embodiment of the deformable hollow body of the preferred load cell being formed like a hollow cylinder, and having a centrally extending fastening channel, to be subjected to a mechanical force,
- Figure 11: a sectional view of a further preferred embodiment of the deformable hollow body of the preferred load cell being formed like an elliptical hollow cylinder, and having a laterally extending fastening channel, to be subjected to a mechanical force,
- Figure 12: a sectional view of a further preferred embodiment of the deformable hollow body of the preferred load cell being formed like an elliptical hollow cylinder, and having a centrally extending fastening channel, to be subjected to a mechanical force,
- Figure 13: a sectional view of a further preferred embodiment of the deformable hollow body of the preferred load cell being formed like a prism, and having a laterally extending fastening channel, to be subjected to a mechanical force,
- Figure 14: a sectional view of a further preferred embodiment of the deformable hollow body of the preferred load cell being formed like a prism, and having a centrally extending fastening channel, to be subjected to a mechanical force, and

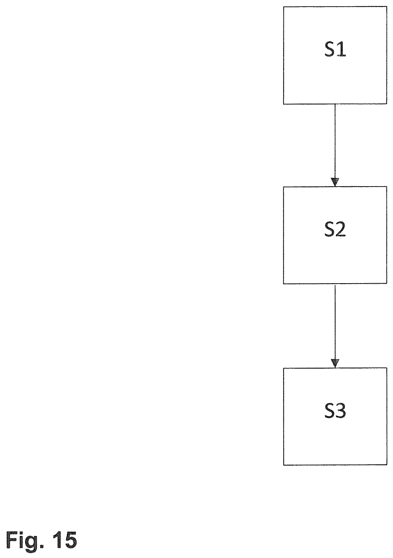

- Figure 15: a flow chart of a preferred embodiment of a manufacturing method of the load cell.

### 5. Detailed description of preferred embodiments

In a variety of technical fields, it is essential to be informed about a filling level of a tank, a container C or the like. Such a container C is exemplarily used for storing and dispensing liquids for cleaning tasks in trains or motor vehicles. As a measurable physical quantity, a weight of the filled container is interpreted to learn about the filling level of the container C. To this end, a load cell 1 is arranged such that it captures or measures the weight force F of the container C acting on the load cell 1.

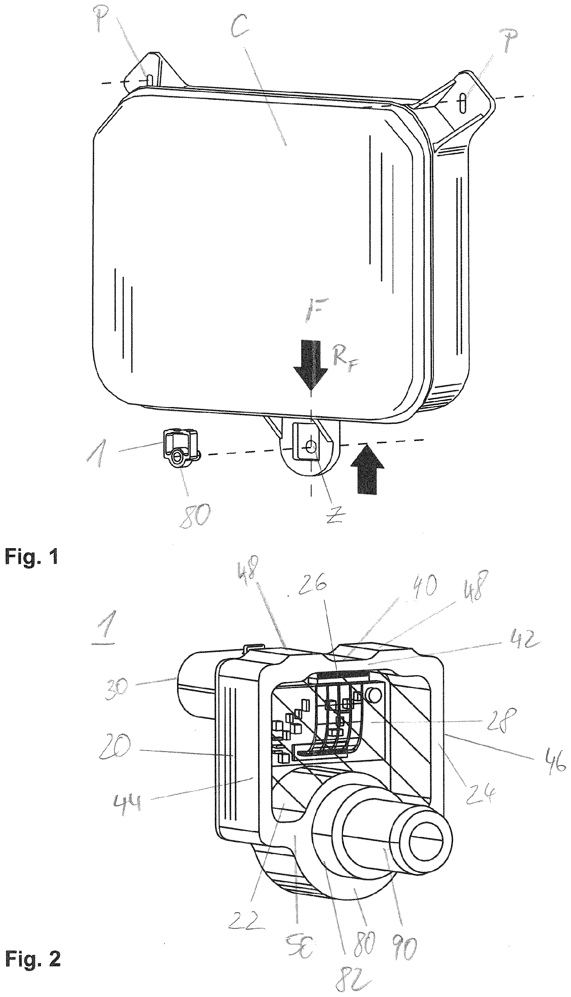

Figure 1 shows a combination of a preferred container C and a preferred embodiment of the load cell 1. The container C is fastened at a stable or frame structure S, e.g. a vehicle frame, a train chassis, a bearing frame in a room or a building.

For fastening the container C, at least two fastening points P are provided fixing the position of the container C at the frame structure S. The fixing of the container C is configured such that it allows a weight sensitive displacement of the container C in the direction of gravity being parallel to the direction of the weight force F. To this end, the fastening points P are formed like an elongated hole. A longitudinal direction of the elongated hole is preferably oriented such that it extends essentially parallel to the direction of gravity or the acting weight force F.

As shown in figure 1, a preferred third fastening point Z is provided positioned at a fixing flange 10 of the container C. The fixing flange 10 provides a contact face 12 bearing against the load cell 1 so that the load cell 1 is subjected to the weight force F of the container C.

The preferred third fastening point Z of the container C is preferably used to fasten the container C together with the load cell 1 to the frame structure S. For the combined fastening of the container C and the load cell 1, a fastening member 90; 92; 94 is used arranged in a fastening structure 50 of the load cell 1. Thereby, the load cell 1 is positioned at a fixed point so that a varying weight force of the container C is measurable by a container displacement relative to this fixed fastening point Z.

In order to enable a certain weight induced container displacement at the third fastening point Z, a fastening opening 14 placed in the fixing flange 10 is preferably larger in diameter then the fastening member 90 of the load cell 1. It is also preferred to shape the fastening opening 14 as an elongated hole preferably extending parallel to the direction of gravity or the weight force F.

The preferably combined fastening of the container C and the load cell 1 at the fastening point Z advantageously saves efforts in time for a separate fastening of the container C and the load cell 1. Further, the inventive preferred configuration of the load cell 1 guarantees that the load measurement of the load cell 1 is not negatively affected by mechanical fastening tensions induced by the fastening element 90 within the load cell 1.

The load cell 1 according to a preferred embodiment of the present invention is shown in a perspective view in figure 2. The load cell 1 comprises a deformable hollow body 20. The deformable hollow body 20 realizes different functions to operate the load cell 1.

The deformable hollow body 20 has a central cavity 22 which is surrounded by a surrounding wall 24. The preferred cavity 22 enables the hollow body 20 to be deformed by an acting mechanical load from the outside thereof, as for example by a weight force F of a container C.

To this end, the hollow body 20 is preferably made of an elastically deformable material to assure that the hollow body 20 returns to its initial shape after load reduction. According to a preferred embodiment of the present invention, the deformable hollow body 20 is made of plastics. According to a further preferred embodiment of the present invention, it is made of metal, like aluminum. It is further preferred to make the deformable hollow body 20 as a part of an extruded metal profile, e.g. an extruded lightweight metal profile as for example aluminum or magnesium or the like.

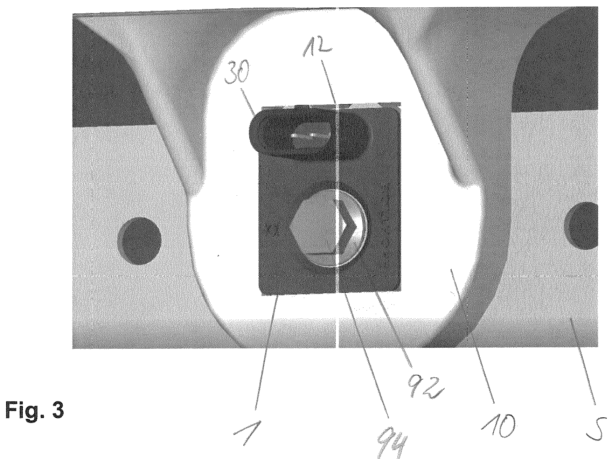

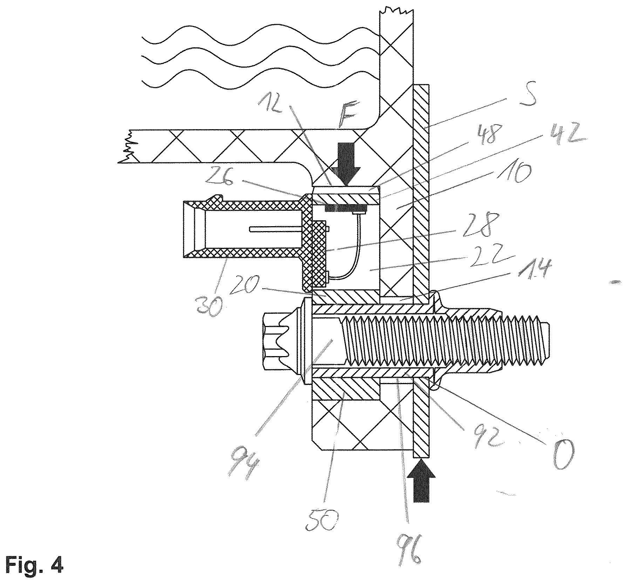

The cavity 22 preferably forms a receiving space for a strain gauge 26, a control electronics 28 of the strain gauge 26 and/or electronic connecting means for the control electronics of the strain gauge 26. The control electronics 28 and the strain gauge 26 are preferably connected to an external power supply (not shown) via a socket or a connector construction 30. In the embodiment of figure 3 and 4, a socket construction 30 is shown.

For protection reasons, the cavity 22 is filled with resin or a similar material. The filling material shields and protects the inner components of the cavity 22 from humidity, dirt, dust, electronic contact, and mechanical damage. It guarantees the use of the preferred load cell 1 in an aggressive and corrosion intensive environment.

The surrounding wall 24 includes a deflection wall 40 subjected and deflected by a mechanical load, e.g. the weight force of the container C. Due to the acting mechanical load or force F, the deflection wall 42 is deformed to the inside of the cavity 22. This deformation is captured or sensed by the strain gauge 26 mounted on the deflection wall 42 inside the cavity 22. It is also preferred to position the strain gauge 26 at the deflection wall 42 outside the cavity 22.

The deformation of the strain gauge 26 is interpreted in a known manner as an acting mechanical force, like the changing weight force of the container C. To this end, the only one strain gauge 26 preferably includes a Wheatstone bridge circuitry.

According to the preferred embodiments of figures 2 to 8, the deflection wall 42 is preferably oriented perpendicular to an acting mechanical load, like the weight force F. Thereby, a maximum deflection or deformation of the deflection wall 42 results from the acting mechanical load F to generate a quantifiable electrical signal within the strain gauge 26. This electrical signal is processed by the control electronics 28 arranged within the cavity 22 and submitted further.

Preferably, the deflection wall 42 is supported by two oppositely arranged side walls 44, 46. On an opposite side to the deflection wall 42, these sidewalls 44, 46 are connected to each other via a fastening structure 50 for the load cell 1.

The deflection wall 42 is laterally supported on its end regions by the lateral walls 44, 46. Based on this arrangement, the deflection wall 42 forms a preferred four-point bending structure as shown in figures 2, 7 and 8.

This four-point bending structure is preferably supported by a centrally arranged pair of supports 48 projecting to the outside of the deformable hollow body 20.

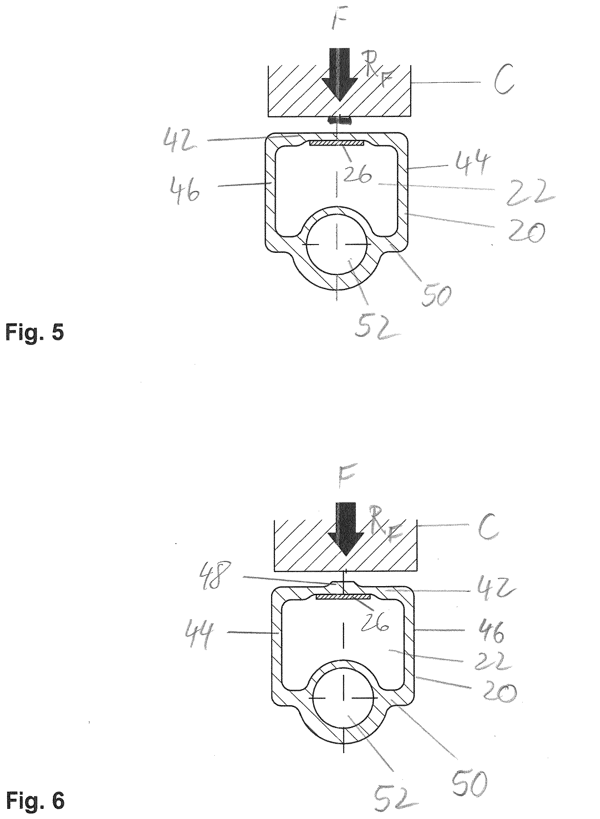

According to a further preferred embodiment, only one central support 48 is used to realize a three-point bending structure as shown in figure 6.

The fastening structure 50 is preferably arranged opposite to the deflection wall 42. The opposed arrangement realizes a large distance between the strain and tension sensitive strain gauge 26 and the fastening structure 50. Thereby, mechanical fastening tensions generated in the fastening structure 50 may relax within the deformable hollow body 20 thereby only slightly or not affecting the measurement of the strain gauge 26.

According to a preferred embodiment of the fastening structure 50 as shown in figures 1, 2, 4, 5, 6, 8, 10, 12, 14, a passage channel 52 for a fastening element 90 is provided extending parallel to a longitudinal direction of the cavity 22. Thereby, the passage channel 52 also extends perpendicular to an acting load direction or the direction of gravity. The passage channel 52 receives a fastening element 90. Preferably, a blind rivet nut 92 is used in combination with a threaded bolt 94 to fasten the load cell 1 together with the container C (see figure 4).

According to a preferred embodiment of the present invention, the blind rivet nut 92 and/or a threaded bolt 94 are pre-assembled within the passage channel 52. In order to fasten the load cell 1 together with the container C at a fixing point, preferably an installation opening O, the blind rivet nut 92 together with the threaded bolt 94 are preferably inserted into the fastening opening 14 of the fixing flange 10 first and thereafter in the installation opening O of the frame structure S. Within the installation opening O, the threaded bolt 94 is tightened, and thereby, the blind rivet nut 92 is set. It is also preferred to first set the blind rivet nut 92, and to introduce and tighten therein the threaded bolt 94 thereafter.

Although the container C is fastened together with the load cell 1, a changing weight force F may still deflect the deflection wall 42 bearing the strain gauge 26. According to one preferred alternative, a clearance 96 exists between the inner wall of the opening 14 and the outer wall of the blind rivet nut 92. Based thereon, the container C can be displaced in the direction of the weight force F to deflect the deflection wall 42 and the strain gauge 26.

Additionally or alternatively, the container C is deformed due to a changing inner weight or inner loading level. The deformation close to the load cell 1 leads to a deformation/deflection of the deflection wall 42 and the strain gauge 26.

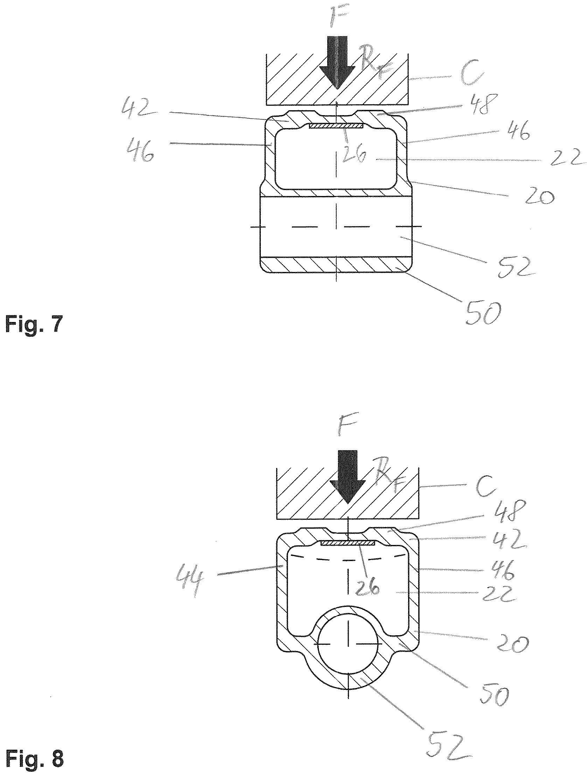

According to a further preferred embodiment of the fastening structure 50, the passage channel 52 extends perpendicular to the longitudinal axis of the cavity 22 as shown in figures 7, 9, 11, 13. This preferred orientation has the same function as the above-described passage channel 52. Consequently, it allows for a fastening to a differently oriented or shaped fixing structure without any negative impact on the load measurement using the strain gauge 26. As is shown in figures 2, 5-8, the deformable hollow body 20 has the shape of a hollow cuboid in an embodiment of the present invention.

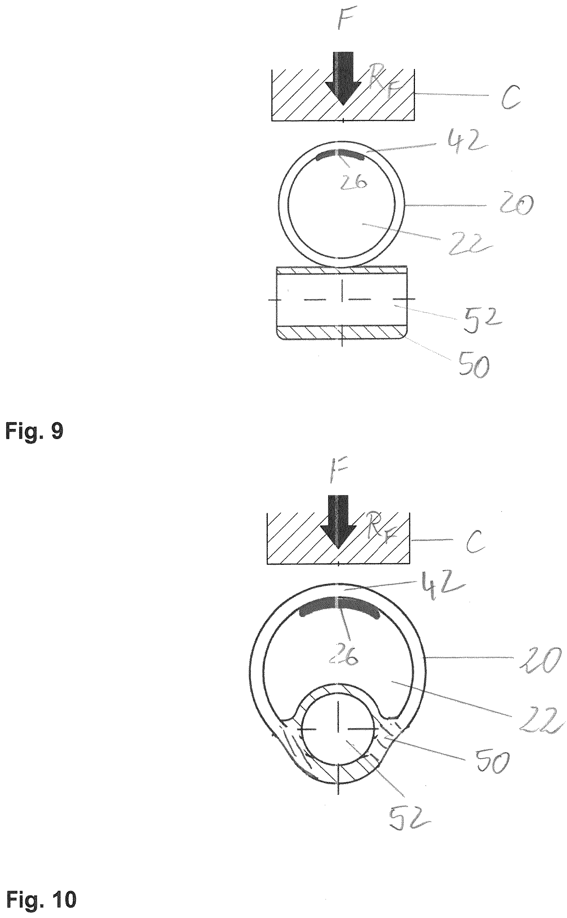

According to a further embodiment of the present invention, the deformable hollow body 20 of the load cell 1 has the shape of a hollow cylinder. Dependent on the fastening structure 50 described above and used in combination with the passage channel 52, a longitudinal axis of the hollow cylindrical deformable body 20 extends parallel or perpendicular to the passage channel 52 (see figures 9, 10).

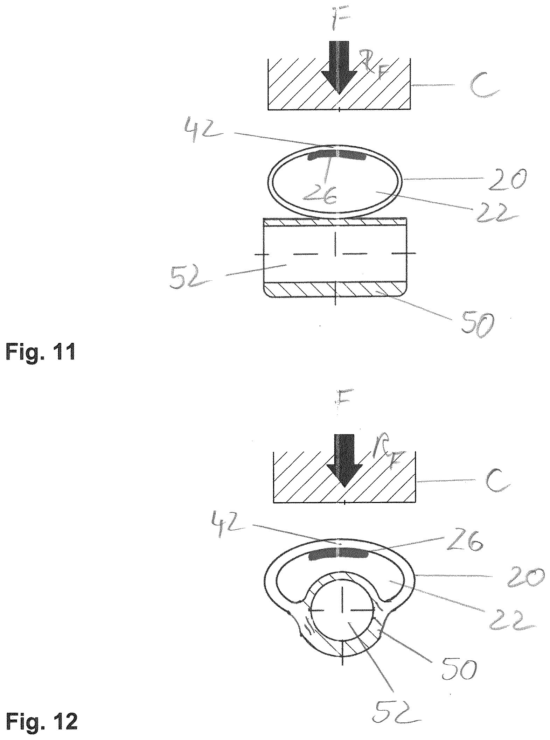

According to a further embodiment of the present invention, the deformable hollow body 20 of the load cell 1 has the shape of an elliptic hollow cylinder. Dependent on the fastening structure 50 described above and used in combination with the passage channel 52, a longitudinal axis of the elliptic hollow cylindrical deformable body 20 extends parallel or perpendicular to the passage channel 52 (see figures 11, 12).

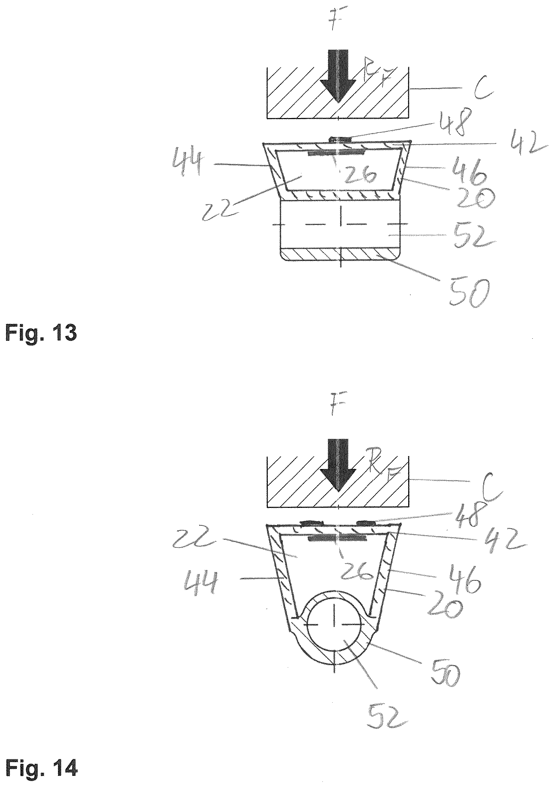

According to another embodiment of the present invention, the deformable hollow body 20 of the load cell 1 has the shape of a prism having open trapezoidal lateral faces, a rectangular deflection wall and a fastening wall smaller than the deflection wall. Dependent on the fastening structure 50 described above and used in combination with the passage channel 52, a longitudinal axis of the prism deformable body 20 extends parallel or perpendicular to the passage channel 52 (see figures 13, 14).

The present invention further discloses a manufacturing method of the load cell 1 according to the above-described preferred embodiments. The manufacturing method comprises the following preferred method steps: providing a deformable hollow body 20 with the fastening structure 50 (step S1), arranging the strain gauge 26 at a deflection wall 42 having a deflection face of the hollow body 20 (step S2), and arranging the control electronics 28 in the cavity 22 of the hollow body 20.

According to a further preferred embodiment of the manufacturing method, the deformable hollow body 20 is provided as a partial piece of an extruded section out of metal (see above). As a consequence, the deformable hollow body 20 is made of an integral metal part, preferably made of extruded aluminum.

Furthermore, the manufacturing method as described above comprises the further step: preassembling a fastening means 92; 94, e.g. a blind rivet nut 92 and/or a threaded bolt 94 in the fastening structure 50.

### 6. List of reference signs

- C: container
- F: weight force of the container
- P: fastening point
- Z: third fastening point
- S: frame structure
- O: fastening opening
- 1: load cell
- 10: fixing flange of the container C
- 12: contact face
- 14: fastening opening of the flange
- 20: deformable hollow body
- 22: cavity
- 24: surrounding wall of the cavity
- 26: strain gauge
- 28: control electronics of the strain gauge
- 30: receptible or connector structure
- 40: deflection face
- 42: deflection wall
- 44, 46: sidewalls
- 48: support for bending
- 50: fastening structure
- 52: passage channel
- 90: fastening element
- 92: blind rivet nut
- 94: threaded bolt

## Claims

1. A deformable load cell (1) with which a mechanical load (F), in particular a weight force, is determinable and which comprises the following features:
a. a deformable hollow body (20) which is deformable by means of a mechanical load (F),
b. the deformable hollow body (20) includes at least one deflection wall (42), which is deformable in a load direction and which is equipped with a strain gauge (26) for determining a deflection,
c. a cavity (22) of the deformable hollow body (20) is surrounded by a circumferential wall (24) and extends perpendicular to the load direction and
d. a fastening structure (50) is provided opposite to the deflection wall (42), with which the deformable hollow body (20) is fastenable at a fixed point (O) so that the deflection wall (42) is deformable relative to the fixed point (O), wherein
e. the fastening structure (50) is remotely arranged to the deflection wall (42) so that the fastening structure (50) is functionally not combined with or involved in the mechanical force measurement, **characterized in that**
f. the deformable hollow body (20) has the cavity (22) arranged transversely to the load direction, and the deformable hollow body (20) is a hollow cylinder or an elliptic hollow cylinder or a hollow cuboid or a prism having open trapezoidal lateral faces, a rectangular deflection wall and a fastening wall smaller than the deflection wall (42).

2. The load cell (1) according to claim 1, in which the fastening structure (50) comprises at least one passage channel (52) for a fastening means (92, 94), the passage channel (52) extending parallel to a longitudinal axis of the cavity (22).

3. The load cell (1) according to claim 1, in which the fastening structure (50) comprises at least one passage channel (52) or an opening for a fastening means, the passage channel/opening (52) extending transversely to a longitudinal axis of the cavity (22).

4. The load cell (1) according to one of the preceding claims, in the cavity (22) of which a control electronics (28) of the strain gauge (26) and the strain gauges (26) is arranged at the deflection wall.

5. The load cell (1) according to one of the preceding claims, in which the deflection wall (42) of the hollow cuboid is arranged transverse to the load direction and two adjacent lateral faces extending parallel to one another form a supporting bar structure for the deflection wall (42).

6. The load cell (1) according to claim 5, in which opposite to the load direction, the deflection wall (42) includes a central support (48) or a central support pair (48) in a projecting manner.

7. A container (C) in combination with the load cell (1) according to one of the preceding claims, wherein the container (C) includes at least two fastening points (P; Z) at which the container (C) is fastenable in an offsetable manner in a gravity direction and the load cell (1) is arranged in a fastened manner underneath the container (C), contacting the container, as well as at a fixed point (Z).

8. The container (C) according to claim 7, wherein a fastening point (Z) of the container (C) is fastenable with the fastening structure (50) of the load cell (1).

9. A manufacturing method of a load cell (1) according to one of the claims 1-6, **characterized by** the following steps:
a. providing a deformable hollow body (20) with a fastening structure (50),
b. arranging a strain gauge (26) at a deflection wall (42) of the hollow body (20),
c. arranging a control electronics (28) in a cavity (22) of the hollow body (20).

10. The manufacturing method according to claim 9, wherein the deformable hollow body (20) is provided as a partial piece of an extruded section out of metal.

11. The manufacturing method according to claim 9 or 10, wherein a fastening means (92, 94) is pre-assembled in the fastening structure (52).

## Patentansprüche

1. Eine verformbare Wägezelle (1), mit der eine mechanische Last (F), insbesondere eine Gewichtskraft, bestimmbar ist und die die folgenden Merkmale aufweist:
a. einen verformbaren Hohlkörper (20), der mittels einer mechanischen Last (F) verformbar ist,
b. der verformbare Hohlkörper (20) umfasst mindestens eine Auslenkwand (42), die in einer Lastrichtung verformbar ist und mit einem Dehnmessstreifen (26) zum Bestimmen einer Auslenkung versehen ist,
c. ein Hohlraum (22) des verformbaren Hohlkörpers (20) ist von einer umlaufenden Wand (24) umgeben und erstreckt sich senkrecht zu der Lastrichtung und
d. eine Befestigungsstruktur (50) ist gegenüber der Auslenkwand (42) bereitgestellt, mit der der verformbare Hohlkörper (20) an einem Fixpunkt (O) befestigbar ist, sodass die Auslenkwand (42) bezogen auf den Fixpunkt (O) verformbar ist, wobei
e. die Befestigungsstruktur (50) entfernt von der Auslenkwand (42) angeordnet ist, sodass die Befestigungsstruktur (50) funktional nicht kombiniert ist mit oder umfasst ist in der mechanischen Kraftmessung, **dadurch gekennzeichnet, dass**
f. bei dem verformbaren Hohlkörper (20) der Hohlraum (22) quer zu der Lastrichtung angeordnet ist, und der verformbare Hohlkörper (20) ist ein Hohlzylinder oder eine elliptischer Hohlzylinder oder ein Hohlquader oder ein Prisma mit offenen trapezförmigen Seitenflächen, einer rechteckigen Auslenkwand und einer Befestigungswand, die kleiner ist als die Auslenkwand (42).

2. Die Wägezelle (1) gemäß Anspruch 1, bei der die Befestigungsstruktur (50) mindestens einen Durchgangskanal (52) für ein Befestigungsmittel (92, 94) umfasst, wobei sich der Durchgangskanal (52) parallel zu einer Längsachse des Hohlraums (22) erstreckt.

3. Die Wägezelle (1) gemäß Anspruch 1, bei der die Befestigungsstruktur (50) mindestens einen Durchgangskanal (52) umfasst oder eine Öffnung für ein Befestigungsmittel, wobei sich der Durchgangskanal/die Öffnung (52) quer zu einer Längsachse des Hohlraums (22) erstreckt.

4. Die Wägezelle (1) gemäß einem der vorhergehenden Ansprüche, in deren Hohlraum (22) eine Steuerelektronik (28) des Dehnmessstreifens (26) angeordnet ist und der Dehnmessstreifen (26) an der Auslenkwand angeordnet ist.

5. Die Wägezelle (1) gemäß einem der vorhergehenden Ansprüche, bei der die Auslenkwand (42) des Hohlquaders quer zu der Lastrichtung angeordnet ist und zwei sich parallel zueinander erstreckende benachbarte Seitenflächen eine Trägerbalkenstruktur für die Auslenkwand (42) bilden.

6. Die Wägezelle (1) gemäß Anspruch 5, bei der entgegengesetzt zu der Lastrichtung die Auslenkwand (42) einen zentralen Träger (48) oder ein zentrales Trägerpaar (48) in vorspringender Art umfasst.

7. Ein Behälter (C) in Kombination mit der Wägezelle (1) gemäß einem der vorhergehenden Ansprüche, wobei der Behälter (C) mindestens zwei Befestigungspunkt (P; Z) umfasst, an denen der Behälter (C) verschiebbar in einer Gravitationsrichtung befestigbar ist und die Wägezelle (1) ist unterhalb des Behälters (C), dadurch den Behälter berührend, und an einem Fixpunkt (Z) fest angeordnet.

8. Der Behälter (C) gemäß Anspruch 7, wobei ein Befestigungspunkt (Z) des Behälters (C) mit der Befestigungsstruktur (50) der Wägezelle (1) befestigbar ist.

9. Ein Herstellungsverfahren einer Wägezelle (1) gemäß einem der Ansprüche 1-6, **gekennzeichnet durch** die folgenden Schritte:
a. Bereitstellen eines verformbaren Hohlkörpers (20) mit einer Befestigungsstruktur (50),
b. Anordnen eines Dehnmessstreifens (26) an einer Auslenkwand (42) des Hohlkörpers (20),
c. Anordnen einer Steuerelektronik (28) in einem Hohlraum (22) des Hohlkörpers (20).

10. Das Herstellungsverfahren gemäß Anspruch 9, wobei der verformbare Hohlkörper (20) als ein Teilstück eines extrudierten Abschnitts aus Metall bereitgestellt ist.

11. Das Herstellungsverfahren gemäß Anspruch 9 oder 10, wobei ein Befestigungsmittel (92, 94) in der Befestigungsstruktur (52) vormontiert ist.

## Revendications

1. Cellule de charge déformable (1) permettant de déterminer une charge mécanique (F), en particulier une force pondérale, et comprenant les caractéristiques suivantes :
a. un corps creux déformable (20), lequel est déformable au moyen d'une charge mécanique (F),
b. le corps creux déformable (20) inclut au moins une paroi de déflexion (42), laquelle est déformable dans une direction de charge et équipée d'une jauge de contrainte (26) destinée à déterminer une déflexion,
c. une cavité (22) du corps creux déformable (20) est entourée par une paroi circonférentielle (24) et s'étend perpendiculairement à la direction de charge et
d. une structure de fixation (50) permettant de fixer le corps creux déformable (20) au niveau d'un point fixe (O) est disposée à l'opposé de la paroi de déflexion (42), de sorte que la paroi de déflexion (42) peut être déformée par rapport au point fixe (O), dans laquelle
e. la structure de fixation (50) est agencée à distance de la paroi de déflexion (42), de sorte que la structure de fixation (50) n'est pas fonctionnellement combinée avec ou impliquée dans la mesure de force mécanique, **caractérisée en ce que**
f. le corps creux déformable (20) comporte la cavité (22) agencée transversalement à la direction de charge, et le corps creux déformable (20) est un cylindre creux ou un cylindre creux elliptique ou un cuboïde creux ou un prisme doté de faces latérales trapézoïdales ouvertes, d'une paroi de déflexion rectangulaire et d'une paroi de fixation plus petite que la paroi de déflexion (42).

2. Cellule de charge (1) selon la revendication 1, dans laquelle la structure de fixation (50) comprend au moins un canal de passage (52) pour un moyen de fixation (92, 94), le canal de passage (52) s'étendant parallèlement à un axe longitudinal de la cavité (22).

3. Cellule de charge (1) selon la revendication 1, dans laquelle la structure de fixation (50) comprend au moins un canal de passage (52) ou une ouverture pour un moyen de fixation, le canal de passage / l'ouverture (52) s'étendant transversalement à un axe longitudinal de la cavité (22).

4. Cellule de charge (1) selon l'une des revendications précédentes, dans la cavité (22) de laquelle une électronique de commande (28) de la jauge de contrainte (26) et des jauges de contrainte (26) est agencée au niveau de la paroi de déflexion.

5. Cellule de charge (1) selon l'une des revendications précédentes, dans laquelle la paroi de déflexion (42) du cuboïde creux est agencée transversalement à la direction de charge et deux faces latérales adjacentes s'étendant parallèlement l'une à l'autre forment une structure de barre de support pour la paroi de déflexion (42).

6. Cellule de charge (1) selon la revendication 5, dans laquelle, à l'opposé de la direction de charge, la paroi de déflexion (42) inclut un support central (48) ou une paire de supports centraux (48), d'une manière saillante.

7. Conteneur (C) en combinaison avec la cellule de charge (1) selon l'une des revendications précédentes, dans lequel le conteneur (C) inclut au moins deux points de fixation (P ; Z) au niveau desquels le conteneur (C) peut être fixé d'une manière décalable dans une direction de gravité et la cellule de charge (1) est agencée d'une manière fixée sous le conteneur (C), en contact avec le conteneur, ainsi qu'au niveau d'un point fixe (Z).

8. Conteneur (C) selon la revendication 7, dans lequel un point de fixation (Z) du conteneur (C) peut être fixé avec la structure de fixation (50) de la cellule de charge (1).

9. Procédé de fabrication d'une cellule de charge (1) selon l'une des revendications 1 à 6, **caractérisé par** les étapes suivantes :
a. mise à disposition d'un corps creux déformable (20) avec une structure de fixation (50),
b. agencement d'une jauge de contrainte (26) au niveau d'une paroi de déflexion (42) du corps creux (20),
c. agencement d'une électronique de commande (28) dans une cavité (22) du corps creux (20).

10. Procédé de fabrication selon la revendication 9, dans lequel le corps creux déformable (20) est fourni comme une pièce partielle d'une section extrudée en métal.

11. Procédé de fabrication selon la revendication 9 ou 10, dans lequel un moyen de fixation (92, 94) est préassemblé dans la structure de fixation (52).
